Europäisches Patentamt

European Patent Office

Office européen des brevets

(11) Veröffentlichungsnummer: **0 440 011 A2**

# EUROPÄISCHE PATENTANMELDUNG

(21) Anmeldenummer: **91100006.5**

(22) Anmeldetag: **02.01.91**

(51) Int. Cl.5: **G01L 1/20**, G01L 9/00

(30) Priorität: **02.02.90 DE 4003048**
**26.07.90 DE 4023747**

(43) Veröffentlichungstag der Anmeldung:
**07.08.91 Patentblatt 91/32**

(84) Benannte Vertragsstaaten:
**AT BE CH DE ES FR GB IT LI NL**

(71) Anmelder: **Pfister Messtechnik GmbH**
**Stätzlinger Strasse 70**
**W-8900 Augsburg(DE)**

(72) Erfinder: **Häfner, Hans Wilhelm**
**Fichtenweg 15**
**W-8890 Aichach-Walchshofen(DE)**
Erfinder: **Bock, Günther**
**Augsburger Strasse 77**
**W-8904 Friedberg(DE)**

(74) Vertreter: **Kahler, Kurt**
**Patentanwalt Dipl.-Ing. Kurt Kahler**
**Gerberstrasse 3 Postfach 1249**
**W-8948 Mindelheim(DE)**

(54) **Kraft-bzw. Druckmessvorrichtung.**

(57) Eine Kraft- bzw. Druckmeßvorrichtung (1) weist ein Topfgehäuse (2) auf, in dem unter Bildung eines engen Ringspalts (4) ein Krafteinleitungskolben (3) eingesetzt ist, wobei der Ringspalt (4) und ein Bodenbereich im Topfgehäuse (2) mit elastomerem Material (5) gefüllt ist, das fest an den Kontaktflächen haftet und das in Kontakt mit einem Kraft- bzw. Druckmeßelement (25) ist, wobei das Kraft- bzw. Druckmeßelement eine Meßmembran (2d) aufweist, die einstückig mit dem Topfgehäuse (2) in dessen Boden ausgebildet ist.

Fig. 1

Die Erfindung betrifft eine Kraft- bzw. Druckmeßvorrichtung gemäß dem Oberbegriff des Patentanspruchs 1 sowie eine insbesondere derartige Vorrichtungen verwendende flächige Kraftmeßvorrichtung.

Aus der EP-C2-0 205 509 ist eine Meßzelle bekannt, bei der in einem stabilen, starren Topfgehäuse eine zylindrische Vertiefung ausgebildet ist, in die ein Meßkolben unter Bildung eines engen Ringspalts eingesetzt ist. Der Ringspalt und der Bodenbereich des Topfgehäuses sind mit blasenfreiem elastomerem Material ausgefüllt, das in Kontakt mit einem Drucksensor ist. Hierbei kann der Drucksensor entweder vollständig in dem elastomeren Material eingebettet sein, oder er steht über eine zentrale Öffnung im Boden des Topfgehäuses mit dem elastomeren Material in Kontakt.

Beide Anordnungsmöglichkeiten des Meßsensors sind jedoch relativ aufwendig, da im Boden des Topfgehäuses entweder Durchgangsbohrungen für die Anschlußdrähte des eingebetteten Drucksensors vorgesehen sein müssen oder eine zentrale Öffnung im Boden des Topfgehäuses hergestellt werden muß, und zudem der Drucksensor von unten her durch einen Spannring an dem Topfgehäuse angeflanscht werden muß.

In manchen Anwendungsfällen interessieren jedoch auch die seitlichen Kraftkomponenten bzw. deren Angriffsrichtung, die jedoch mit dieser nur für punktuelle Krafteinleitung geeigneten Kraftmeßvorrichtung nicht erfaßbar ist.

Deshalb wird gemäß dieser Druckschrift wird bei ungleichmäßiger Krafteinleitung eine Kraftmeßvorrichtung vorgeschlagen, bei der mehrere Druckwandler in dem elastomeren Material zwischen zwei starren Platten matrixartig verteilt sind und dabei einen Kraftmeßteppich bilden. Da jeder Druckwandler oder Drucksensor jeweils ein eigenständiges Element ist, wird bei höherer Zahl der Druckwandler die Herstellung aufwendig. Darüberhinaus ist die Meßgenauigkeit einer derartigen flächenhaft verteilten Kraftmeßvorrichtung verhältnismäßig gering, da die Position der einzelnen Druckwandler nicht exakt festgelegt ist und insbesondere während des Einbringens des elastomeren Materials zwischen den beiden Platten Verschiebungen der Druckwandler auftreten können, so daß keine exakte Erfassung der angreifenden Kräfte und/oder deren Ausrichtung möglich ist. Zudem entsteht durch die erforderliche Einbettung der Drucksensoren in dem elastomeren Material ein sehr hoher Materialverbrauch, so daß die Herstellung insgesamt relativ aufwendig ist.

Der Erfindung liegt deshalb die Aufgabe zugrunde, eine Kraft- bzw. Druckmeßvorrichtung mit einfachem Aufbau anzugeben. In Weiterbildung soll die erfindungsgemäße Kraftmeßvorrichtung gegen seitliche Kräfte unempfindlich sein und eine hohe Genauigkeit aufweisen.

Auch liegt der Erfindung die weitere Aufgabe zugrunde, eine flächige Kraftmeßvorrichtung zu schaffen, die eine vereinfachte Herstellung und eine höhere Meßgenauigkeit, insbesondere auch unter Erfassung der Kraftangriffsrichtung ermöglicht.

Die erste Aufgabe wird gelöst mit einer Kraft- bzw. Druckmeßvorrichtung mit den Merkmalen des Patentanspruches 1, die weitere Aufgabe einer flächigen Kraftmeßvorrichtung mit den Merkmalen des Patentanspruchs 11.

Durch die Ausbildung des Bodens des elastomeres Material enthaltenden Topfgehäuses als Meßmembran wird ein gesonderter Anbau eines Meßsensors oder eine Einbettung eines Meßsensors innerhalb des Topfgehäuses vermieden. Vielmehr bildet der Boden des Topfgehäuses zugleich die Membran des Meßsensors. Damit werden zusätzliche Bauteile und Durchgangsöffnungen aus dem Topfgehäuse vermieden, so daß sich eine äußerst einfache Herstellung ergibt. Zudem werden Abdichtungsprobleme an Grenzflächen vermieden, da durch die einstückige Ausbildung der Membran integral mit dem Topfgehäuse keinerlei Anschlußflächen vorhanden sind.

In bevorzugter Ausgestaltung weist der Meßkolben eine flächengrößere Druckeinleitungsplatte auf, so daß für kleinere Drücke eine größere Angriffsfläche und damit eine Übersetzung erreicht wird.

Weiterhin ist von Vorteil, daß die auf der Meßmembran aufgebrachten Meßwiderstände, die bevorzugt in einer Brückenschaltung ausgeführt sind, sehr hochohmig sind, so daß in der Auswerteschaltung nur ein sehr geringer Stromverbrauch erfolgt. Damit eignen sich derartige Meßvorrichtungn zur kontinuierlichen Drucküberwachung beispielsweise in Tankmeßeinrichtungen, beispielsweise für die laufende Überwachung der Entnahmemenge in einem Heizöltank für eine Wohnungsheizung.

Durch die Ausbildung von wenigstens drei Meßstellen in dem gemeinsamen Basisteil sind mit der flächigen Kraftmeßvorrichtung nicht nur die vertikalen Kraftkomponenten einzeln für sich erfaßbar, sondern durch Vergleich der einzelnen Meßwerte an den gleichmäßig verteilten Meßstellen ist auch eine Erfassung der Kraftangriffsrichtung auch bei einer gewissen Schrägstellung eines Krafteinleitungsteiles möglich. Da die einzelnen Meßstellen mit ihren Lastkolben durch den engen Ringspalt exakt in dem gemeinsamen Basisteil positioniert sind, kann deren gegenseitiger Abstand zur Berechnung von Schrägstellungen oder der Krafteinleitungsrichtung mit hoher Genauigkeit herangezogen werden.

Durch die Lagerung der einzelnen Lastkolben in dem gemeinsamen Basisteil wird neben der exakten Positionierung auch eine bedeutende Herstellungsvereinfachung erreicht, da das jeweils topfförmige Basisteil für die einzelnen Lastkolben nunmehr einstückig, beispielsweise durch einen Preßvorgang in einem Arbeitsschritt hergestellt werden kann.

Von besonderem Vorteil ist die Ausbildung, bei der der Drucksensor durch eine Membran gebildet wird, die jeweils an den Meßstellen einstückig mit dem Basisteil ausgebildet ist. Ein derartiges Basisteil mit mehreren integrierten Membranen wird dabei vorzugsweise aus Keramik hergestellt und in einem Arbeitsgang gepreßt.

Eine weitere Vereinfachung bei der Herstellung der Kraftmeßvorrichtung erlaubt eine vorteilhafte Ausgestaltung, bei der die Lastkolben der einzelnen Meßstellen zusammenhängend als Ring ausgebildet sind, der in eine entsprechend ausgebildete Ringnut im einstückigen Basisteil unter Bildung des Ringspalts für das elastomere Material eingepaßt ist. Der Boden der Ringnut im Basisteil bildet hierbei eine ringsumlaufende dünnwandige Membran.

Bevorzugte Weiterbildungen der Erfindung sind in den abhängigen Ansprüchen gekennzeichnet.

Weitere Merkmale und Vorteile der Erfindung ergeben sich aus der nachfolgenden Beschreibung von Ausführungsbeispielen anhand der Zeichnungen. Es zeigen:

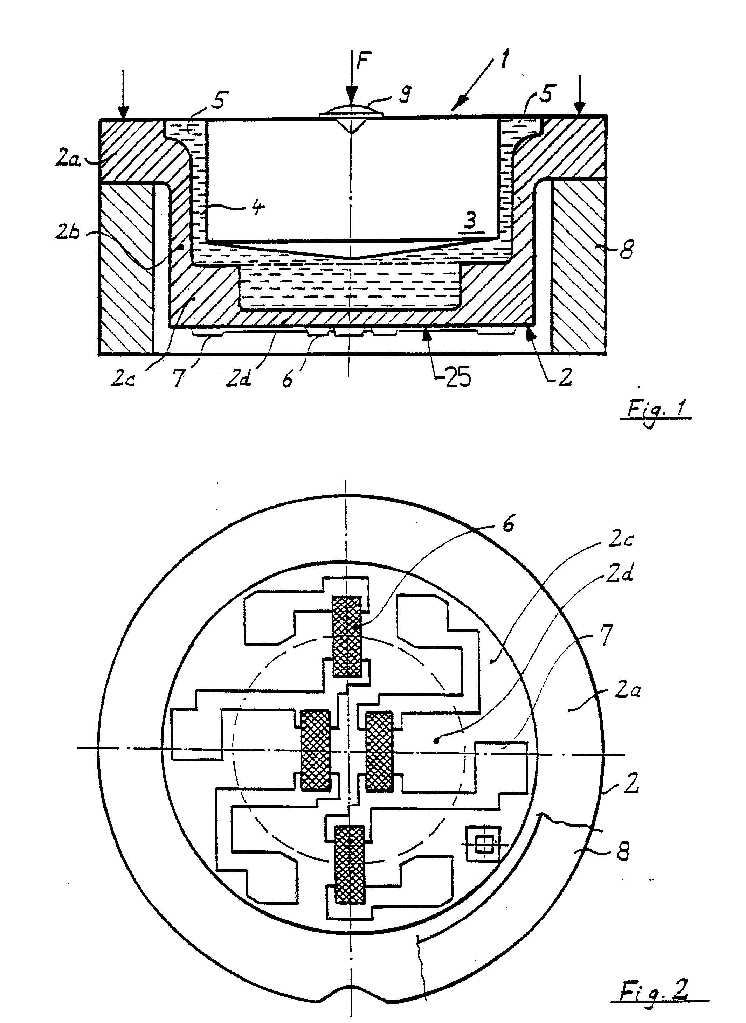

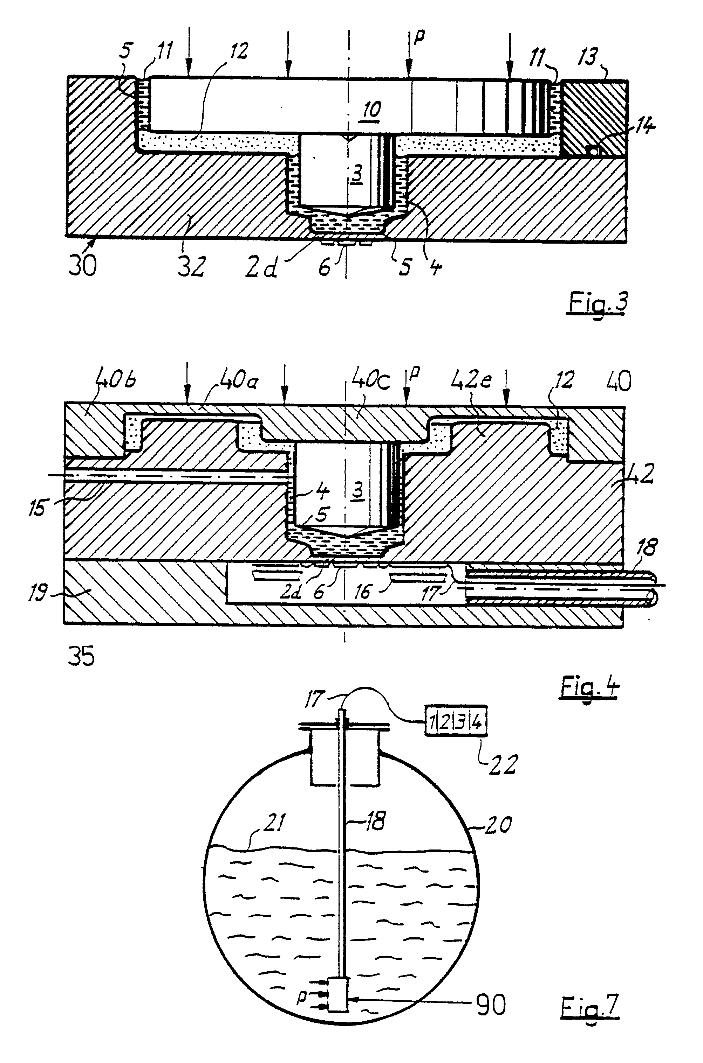

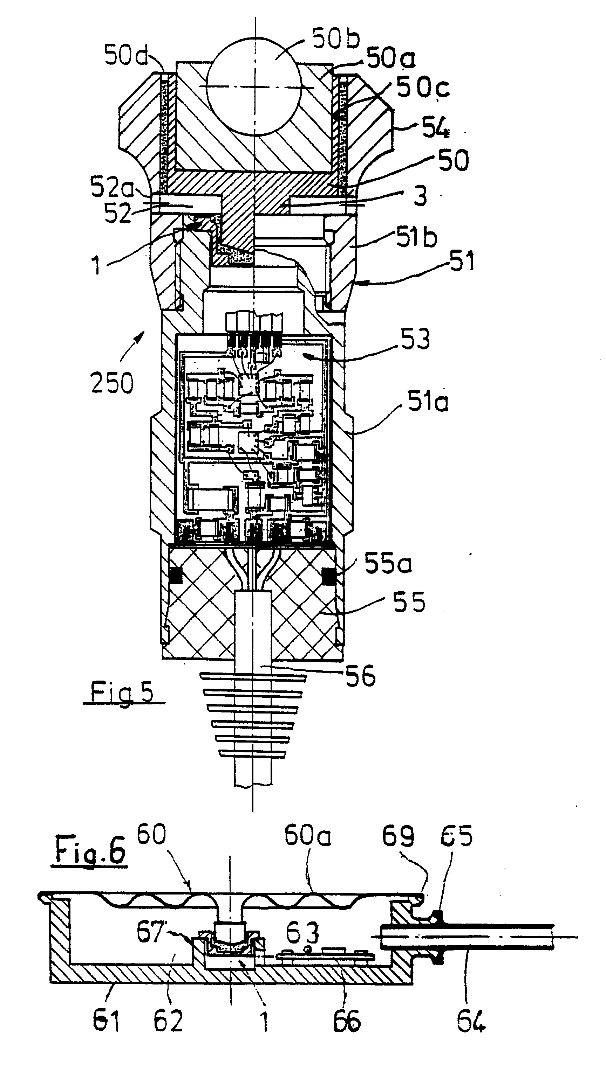

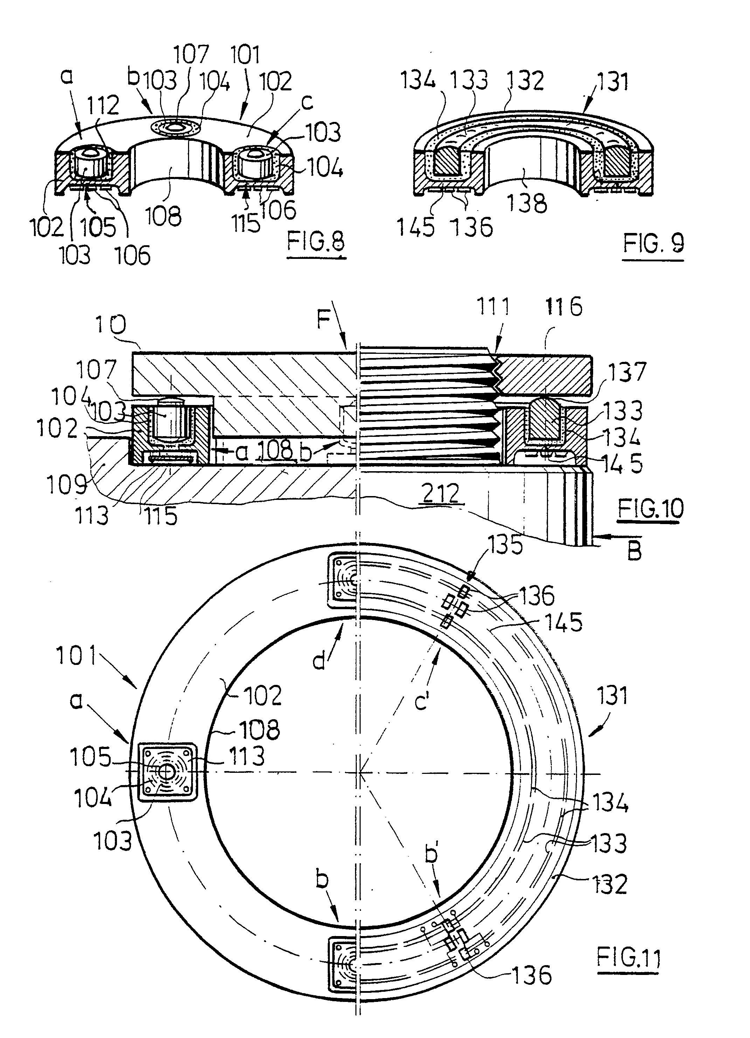

Fig. 1
eine Schnittdarstellung einer Meßvorrichtung gemäß einem ersten Ausführungsbeispiel;
Fig. 2
eine Unteransicht der Meßvorrichtung gemäß Fig. 1;
Fig. 3
eine zweite Ausführungsform einer erfindungsgemäßen Meßvorrichtung mit Druckübersetzung;
Fig. 4
eine abgewandelte Ausführungsform der Meßvorrichtung gemäß Fig. 3;
Fig. 5 und 6
weitere Ausführungsformen einer Meßvorrichtung der Erfindung;
Fig. 7
eine Anwendung der Meßvorrichtung gemäß Fig. 4 oder 6;
Fig. 8
eine Ausführungsform einer erfindungsgemäßen flächigen Kraftmeßvorrichtung in perspektivischer Schnittdarstellung;
Fig. 9
eine zweite Ausführungsform einer flächigen Kraftmeßvorrichtung in perspektivischer Schnittdarstellung;
Fig. 10
einen Querschnitt durch die beiden Ausführungsbeispiele gemäß Fig. 8 und 9;
Fig. 11

eine Unteransicht auf die Ausführungsbeispiele gemäß Fig. 10; und
Fig. 12 und 13
Querschnitte zweier weiterer Ausführungsbeispiele einer Kraftmeßvorrichtung der Erfindung.

In Fig. 1 ist eine Kraftmeßvorrichtung 1 des ersten Ausführungsbeispiels im Querschnitt dargestellt. In einem Topfgehäuse 2, vorzugsweise aus keramischem Material, ist unter Bildung eines Ringspaltes 4 ein Krafteinleitungskolben 3 eingesetzt (vgl. EP-C2-0 205 509). Der Ringspalt 4 ist sehr eng, jedoch hier der Übersichtlichkeit wegen größer dargestellt. Das Topfgehäuse 2 ist einstük-kig ausgebildet, wobei jedoch folgende Bereiche zu unterscheiden sind: An einem stabilen Einspannring 2a kann die Befestigung des Topfgehäuses 2 derart erfolgen, daß Einspannkräfte nicht auf die kraftmessenden Teile übertragen werden, was Meßwertverfälschungen verursacht. Hieran schließt sich ein relativ dünnwandiger flexibler Ringbereich 2b an, der im wesentlichen mit der Außenfläche des Kolbens 3 den Ringspalt 4 bildet, der mit elastomerem Material 5, beispielsweise Silikongummi oder Naturkautschuk, welches fest an den Kontaktflächen haftet, insbesondere ausvulkanisiert ist, gefüllt ist. Der Kolben 3 ist mit einem Krafteinleitungsknopf 9, etwa in Form einer Kalotte versehen. An den Ringbereich 26 schließt sich ein Versteifungsring 2c an, der als Halterung einer wiederum relativ dünnwandigen Membran 2d eines Kraft-bzw. Druckmeßelements 25 dient. Die Membran 2d steht in der zum Meßkolben 3 gewandten Seite in unmittelbarem Kontakt mit dem Elastomer 5, so daß eine den Kolben 3 belastende senkrechte Kraft F praktisch reibungsfrei und proportional auf die Membran 2d weitergeleitet wird. Seitliche Kraftkomponenten werden über das elastomere Material auf das Topfgehäuse und dessen Einspannung abgeleitet. Entsprechend der Belastung verformt sich die Membran 2d geringfügig, wobei die Bela-stungswerte Widerstandsänderungen an Meßwider-ständen 6 hervorrufen, die an der gegenüberliegenden, hier unteren Seite des Topfgehäuses 2, beispielsweise als Dickschicht-Widerstände im Siebdruckverfahren aufgebracht sind.

Wie in Fig. 2 dargestellt, sind die hier zur Darstellung des Siebdruckverfahrens schraffiert ge-zeichneten Meßwiderstände 6 als Brückenschal-tung ausgeführt, wobei die Widerstandsänderungen bei Belastung des Kolbens 3 und damit der Membran 2d über Kontakte 7 an eine an sich bekannte Auswerteschaltung 16 (vgl. Fig. 4) weitergeleitet werden.

Das Topfgehäuse 2 sitzt in einem Lagerring 8 umgeben, der einerseits die Membran 2d frei beweglich läßt und andererseits die Befestigung am Einspannring 2a ermöglicht. Der Lagerring 8 und das Topfgehäuse 2 können in bevorzugter Ausbildung auch einstückig als ein Keramikbauteil ausgeführt sein, so daß die Trennfläche zwischen dem Lagerring 8 und dem Einspannring 2a entfällt. Zur Herstellung der erfindungsgemäßen Meßvorrichtung, insbesondere der Füllung des Ringspaltes 4 mit elastomerem Material 5 wird ein Verfahren verwendet, wie es in der EP-C2-0 205 509 ausführlich beschrieben ist. Zur Herstellung des keramischen Topfgehäuses 2 zusammen mit der Membran 2d wird dieses Bauteil zunächst aus ungebranntem keramischem Material, z. B. $Al_2O_3$ geformt und anschließend zu dem einstückigen Topfgehäuse 2 gebrannt. Geeignete Materialien, Brenntemperaturen und Verfahrensschritte sind beispielsweise in der DE-A-38 17 695 angegeben.

Fig. 3 zeigt eine Ausführungsform einer Druckmeßvorrichtung 30 mit Übersetzung, bei der die Meßvorrichtung 1 nach Fig. 1 mit Vorteil verwendet werden kann. Über dem Kolben 3 ist eine großflächige Druckeinleitungsplatte 10 vorgesehen, die eine wesentlich größere Querschnittsfläche als der Kolben 3 aufweist. Damit ist diese Ausführung insbesondere für niedrigere Drücke bzw. geringe Druckunterschiede geeignet, da aufgrund des Flächenverhältnisses eine Übersetzung des angreifenden Druckes p im Bereich von beispielsweise 1 : 50 erfolgt. Bevorzugt ist die Druckeinleitungsplatte 10 einstückig mit dem Kolben 3 ausgebildet; sie kann jedoch auch auf den Kolben 3 der Ausführung nach Fig. 1 aufgesetzt, etwa mit dieser verschraubt sein, wobei der Krafteinleitungsknopf 9 durch die Druckeinleitungsplatte 10 ersetzt wird.

Am Umfang der Druckeinleitungsplatte 10 ist ein zweiter enger Ringspalt 11 vorgesehen, der ebenfalls mit elastomerem Material 5 gefüllt ist und nach außen durch einen Gehäusering 13 begrenzt ist. Der Gehäusering 13 kann ebenfalls mit dem Topfgehäuse 32 einstückig ausgeführt sein, wie dies die linke Hälfte der Fig. 3 zeigt, während rechts die zweistückige Ausführung dargestellt ist, wobei der Gehäusering 13 gegenüber dem Topfgehäuses 32 mittels einer Dichtung 14 abgedichtet ist. Zwischen dem ersten Ringspalt 4 und dem zweiten Ringspalt 11 ist ein Hohlraum 12 ausgebildet, der beispielsweise mit der beim Füllen mit elastomerem Material 5 verbleibenden Luft gefüllt ist. Hierdurch bildet sich ein Gaspolster aus, das die geringfügige Bewegung des Kolbens 3 bzw. der Druckeinleitungsplatte 10 bei Belastung nicht behindert, ggf. sogar vorteilhaft dämpft. Anstelle von Gas kann auch ein Schaummaterial in den Hohlraum eingefüllt sein.

Andererseits kann jedoch für sehr hohe Kräfte die Druckeinleitungsplatte 10 auch mit einer kleineren Fläche als der Kolben 3 ausgeführt werden, so daß sich für hohe Drücke eine Untersetzung ergibt. Dementsprechend wird der Durchmesser des Gehäuseringes 13 kleiner gewählt, so daß der zweite Ringspalt 11 dann einen kleineren Ringdurchmesser als der erste Ringspalt 4 aufweist. In diesem Falle wäre zur Einfügung des Kolbens 3 eine Teilung zwischen dem Einspannring des Topfgehäuses 32 und dem Gehäusering 13 erforderlich.

Die Ausführungsform mit großflächiger Druckeinleitungsplatte 10 eignet sich insbesondere für geringfügige Druckunterschiede oder niedrigere Absolutdrücke. Die Druckmeßvorrichtung 30 der Fig. 3 kann für vielfältige Zwecke verwendet werden, beispielsweise um die Flüssigkeitssäule in Heizöltanks (vgl. Fig. 7) zu erfassen, wobei durch die hohe Ansprechgenauigkeit eine kontinuierliche Verbrauchsmessung möglich ist.

Von Bedeutung ist ferner die plane Unterseite des Topfgehäuses 32, so daß diese vor Aufbringen der Meßwiderstände 6 bearbeitet werden kann und dann die Meßwiderstände 6 und zugehörige elektrische Bauelemente direkt auf diese Unterseite in einfacher Weise aufgebracht z. B. aufgedruckt werden können.

Fig. 4 zeigt eine Druckmeßvorrichtung 35 als abgewandelte Ausführung der Druckmeßvorrichtung 30 nach Fig. 3, wobei der zweite Ringspalt 11 entfällt und für die Druckeinleitungsplatte 40 einen dünnwandigen, eine geringe Vertikalbewegung ermöglichenden Ringbereich 40a aufweist, der zwischen einem Abstützring 40b und einem mit dem Kolben 3 verbundenen Zentralteil 40c einstückig ausgebildet ist. Erhöhungen 42e des Topfgehäuses 42 können dabei als Begrenzungsanschlag und Zentrierung dienen. Der Abstützring 40b ist starr mit dem Topfgehäuse 42, z. B. mit einer Glasfritte oder einem Lot verbunden.

Bevorzugt ist die Druckeinleitungsplatte 40 zusammen mit dem Kolben 3 hergestellt, wobei dieses Bauteil dann im ungebrannten (grünen) Zustand auf das ebenfalls ungebrannte Topfgehäuse 42 aufgesetzt und zusammen mit einem Fertigteil gesintert wird. Hierdurch ergibt sich eine Fertigungsvereinfachung und eine absolut dichte Übergangsfläche zwischen Topfgehäuse 42 und Abstützring 40b.

Zum Einbringen des elastomeren Materials 5 in den Ringspalt 4 am Kolben 3 ist hier eine Stichbohrung 15 vorgesehen, die vor dem Vulkanisieren des elastomeren Materials 5 verschlossen wird. Die verbleibende Luft bildet dabei das Gaspolster 12. Auf die plane Unterseite des Topfgehäuses 42 kann neben den Meßwiderständen 6 auch eine zugeordnete Auswerteschaltung 16 unmittelbar auf die Keramik aufgebracht und mit einer Abdeckung 19 hermetisch verschlossen werden. Zur Übertragung des Druck- bzw. Kraftsignals von der Membran 2d ist ein Kabel 17 von der Auswerteschaltung 16 durch ein Rohr 18 nach außen geführt, das abgedichtet in der Abdeckung 19 befestigt ist. Das Rohr 18 dient dabei als Kabelführung und -schutz.

In Fig. 7 ist eine Anwendung einer derartigen, hermetisch abgedichteten Druckmeßvorrichtung 90 gemäß der Fig. 3, 4 oder 6 dargestellt. Diese ist bevorzugt an dem Rohr 18 in einen Tank 20 abgesenkt und erfaßt dabei den statischen Druck p der Flüssigkeit 21, der mit dem Tankinhalt in Beziehung gesetzt werden kann. Durch die sehr hohe Meßgenauigkeit insbesondere aufgrund der hohen Übersetzung durch die großflächige Druckeinleitungsplatte 10 bzw. 40 sind Druckdifferenzen von tausendstel bar noch meßbar. Dadurch kann eine laufende Verbrauchsmessung durchgeführt werden und auf einem über das Kabel 17 verbundenen Anzeigegerät 22 außen oder an entfernter Stelle angezeigt werden. Durch die Befestigung der Meßvorrichtung 90 an dem Rohr 18 braucht die Meßvorrichtung 90 im Tank 20 nicht fixiert werden. Zudem ist das nach außen führende Kabel 17 geschützt und die Meßvorrichtung 90 ist auf verschiedene Tanktiefen einstellbar.

Fig. 5 zeigt eine Ausführungsform einer erfindungsgemäßen Kraftmeßvorrichtung 250, bei der das anhand der Figuren 3 und 4 erläuterte Prinzip Verwendung findet, jedoch nicht zur Druckübersetzung, sondern zur seitlichen Stabilisierung.

Die Kraftmeßvorrichtung 1 (vgl. Fig. 1) ist wiederum in ein Gehäuse 51 eingesetzt, und ihr Kolben 3 ist nach oben hin durch einen wesentlich erweiterten Kolben 50 fortgesetzt, der in einer entsprechenden zylindrischen Ausnehmung 50d im Gehäuse 51 unter Bildung eines weiteren engen Ringspalts 50c, umgeben von elastomerem Material geführt ist. Ein dem Ringraum 12 (Fig. 3) entsprechender Ringraum 52 kann durch eine Radialbohrung 52a mit der Atmosphäre verbunden sein.

Im Kolben 50 ist vorzugsweise über eine Halterung 50a ein Krafteinleitungselement 50b, vorzugsweise reibungsarm beweglich in der Halterung 50a angeordnet. Das Krafteinleitungselement 50b ist beim Ausführungsbeispiel eine Stahlkugel; es kann jedoch auch ein mit der Spitze bzw. Schneide nach oben zeigender Kegel oder Schneidenelement sein.

Es ist zu beachten, daß der Kolben 50 eine verhältnismäßig große Höhe besitzt, über die er in der Vertiefung 50d geführt ist. Der Zweck dieser Anordnung ist es, den Einfluß von seitlichen Kraftkomponenten auszuschalten, die bei einer derartigen Anordnung sogar erheblich sein könnten, ohne die Genauigkeit der Vertikalkraftmessung zu beeinträchtigen.

Als beispielsweise und bevorzugte Dimensionierung seien folgende Maße genannt: Durchmesser des Kolbens 50 etwa doppelt so groß wie derjenige des Kolbens 3 und die Höhe des Kolbens 50 gleich dessen halbem bis ganzem Durchmesser. Diese Dimensionen richten sich nach dem jeweiligen Einsatzgebiet, insbesondere der Größe der Gesamtkräfte und deren nicht-vertikalem Anteil und können um den Faktor 0,3 bis 3, bevorzugt 0,5 bis 2 sich ändern.

Das Ausführungsbeispiel nach Fig. 5 zeigt auch eine vorteilhafte Möglichkeit, wie in Standardbauweise ein erfindungsgemäßer Kraftmeßsensor 250 für die verschiedensten Zwecke eingesetzt werden kann. Hierzu ist das Gehäuse 50 ähnlich einer Motorzündkerze geformt, mit einem Grundteil 51a und einem vorzugsweise aufschraubbaren Kopfteil 51b, das dann in verschiedenster Weise ausgestaltet sein kann.

Das Grundteil 51a dient einmal als Halterung zur Aufnahme der Meßvorrichtung 1 und umgibt andererseits eine Sensorelektronik 53, die über ein Kabel 56 mit Strom versorgt wird. Über das Kabel 56 wird dann auch das verstärkte Sensorsignal zur Auswertung abgegeben. Das Kabel 56 wird über ein Abschlußelement 55 der so gebildeten "Kraft- bzw. Druckkerze" eingeführt, das über eine Dichtung 55a die Sensorelektronik 53 nach außen abdichtet.

Der Sensorkopf 51b kann in verschiedener Weise ausgestaltet sein. So kann der Kolben 50 ganz unterschiedlichen Durchmesser und unterschiedliche Höhe haben und mit unterschiedlichen Einsätzen 50a, 50b versehen sein oder nach oben hin einstückig lediglich eine Krafteinleitungskalotte tragen.

Als Befestigung an einer Kraft- bzw. Druckmeßposition kann der Meßkopf mit einem Außengewinde 54 versehen sein oder einen Radialflansch zur Befestigung an einer Öffnung aufweisen.

Es sei bemerkt, daß für eine Druckmessung der Meßkopf 51b entsprechend angepaßt wird, etwa unter einer Ausbildung ähnlich denjenigen der Figuren 3, 4 und 6.

Obwohl vorstehend als Material für die verschiedenen Elemente, wie Gehäuse, Druck- bzw. Krafteinleitungskolben, etc., Keramik bevorzugt angegeben wurde, sind für verschiedene Ausführungsformen auch andere Materialien, insbesondere Edelstahl, mit Vorteil anwendbar. Dies gilt insbesondere auch für die Kraft- bzw. Druckkerze nach Fig. 5.

Fig. 6 zeigt schematisch ein einfaches Ausführungsbeispiel einer Druckmeßdose, bei der Metall, insbesondere Edelstahl, mit Vorzug Verwendung finden kann. Hierbei ist wiederum ein topfförmiges Gehäuse 61 vorgesehen, das mittels einer Membran 60 abgedeckt ist, die mit dem Gehäuse 61 über eine Schweißnaht 69 verbunden sein kann. Beim Ausführungsbeispiel ist eine Wellmembran 60 gewählt, die in einem Zwischenbereich 60a ringförmige Wellen aufweist und in der Mitte in einen Kolben 63 mündet, der der Krafteinleitungskolben für die Meßvorrichtung 1 (vgl. Fig. 1) ist, die in einer am Bodeninneren des Gehäuses 61 abstehenden Halterung 67 angeordnet ist.

Im Inneren des Gehäuses 61 befindet sich auch eine entsprechende Schaltungsplatte oder ein Chip 66 für die Sensorelektronik, die über in einem Rohr 64 geführte (nicht gezeigte) Leitungen mit Strom versorgt und bezüglich der Sensorsignale abgefragt wird. Das Rohr 64 ist beispielsweise an einer Wulst 65 mit dem Gehäuse 61 verschweißt und kann mit der Atmosphäre in Verbindung stehen, so daß bei Druckeinwirkung auf die Membran 60 ein Differenzdruck gemessen wird.

Andererseits kann das Innere des Gehäuses 61 auch evakuiert oder mit einem Schutzgas gefüllt sein (bei geschlossenem Rohr 64), so daß eine Absolutdruckmessung erfolgt (Beispiel: Barometer).

Eine derartige Druckmeßdose nach Fig. 6 läßt sich mit Vorteil zur Tankfüllmessung verwenden, wie dies anhand von Fig. 7 dargestellt ist. Wird das Rohr 64 um 90° abgebogen, so läßt sich die Druckmeßdose am Boden des Tanks anordnen, so daß auch minimale Füllstandsmengen gemessen werden können.

Bei einer anderen Ausführungsform dieser Druckmeßdose ist das Gehäuse 61 etwa im Bereich der Schweißnaht 69 mit einem Flansch versehen, so daß die Druckmeßdose an einer Tankwand, insbesondere am Boden eines Tanks mit der Membran 60 einer Öffnung in der Tankwand gegenüberliegend abgedichtet angebracht werden kann. Als besondere Anwendung wird an Treibstofftanks bei Kraftwagen und Flugzeugen gedacht.

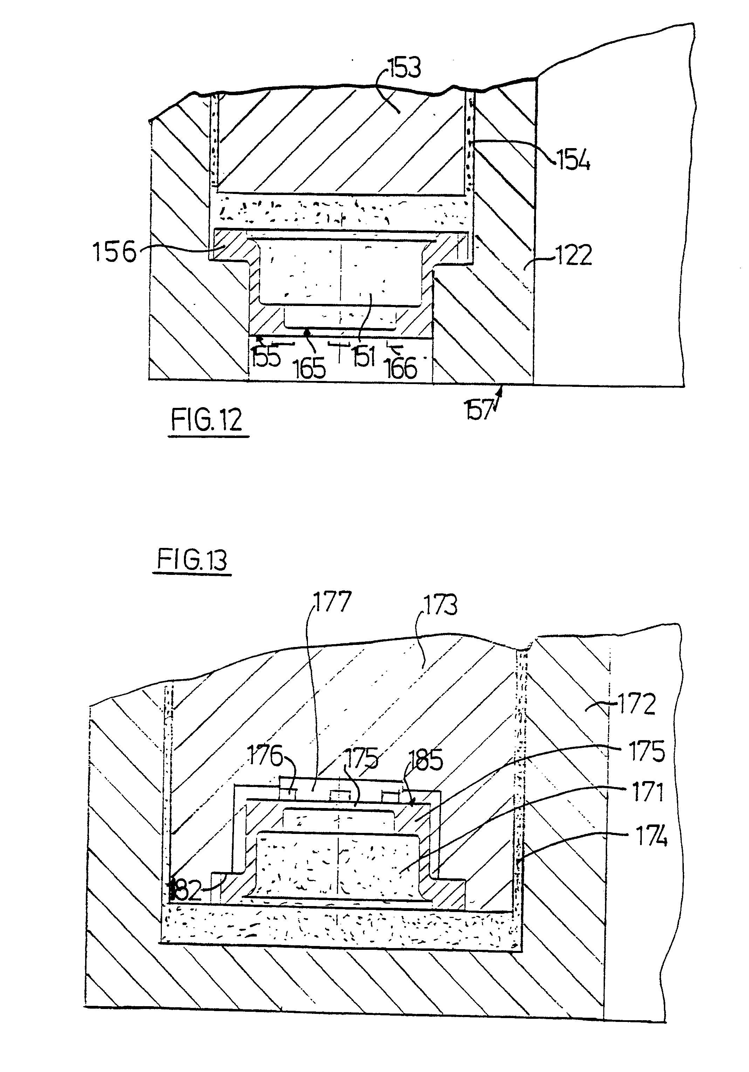

Die Fig. 8, 10 und 11, links, zeigen eine flächige Kraftmeßvorrichtung 101 mit einem ringförmigen Basisteil 102, in das mehrere Lastkolben 103 eingepaßt sind. Die Kraftmeßvorrichtung 101 weist beispielsweise vier Lastkolben 103 auf, von denen in Fig. 8 aufgrund der Schnittdarstellung lediglich drei dargestellt sind. Die Lastkolben 103 sind in Ausnehmungen 112 des Basisteiles 102 unter Bildung eines engen Ringspaltes 104 eingesetzt, wobei der Ringspalt 104 zur besseren Übersichtlichkeit vergrößert dargestellt ist. In Wirklichkeit ist der Ringspalt 104 sehr eng ausgebildet und weist je nach Dimensionierung der Kraftmeßvorrichtung 101 ein Spaltmaß von beispielsweise 0,2 - 2 mm auf. Der Ringspalt 104 und der Bodenbereich an der Unterseite des Lastkolbens 103 ist mit elastomerem Material, insbesondere Silikonkautschuk ausgefüllt, das punktiert dargestellt ist. Die einzelnen Lastkolben 103 wirken unter Zwischenschaltung des elastomeren Materials auf je einen Drucksensor 105 und bilden somit bei gleichmäßiger Aufteilung im 90°-Winkelabstand insgesamt vier Meßstellen a, b, c, d, wobei jedoch aufgrund der Schnittdarstellung die vierte Meßstelle d nur in Fig. 11 dargestellt ist. Zur Bestimmung der auf die Kraftmeßvorrichtung 101 über die Lastkolben 103 mit erhöhten Krafteinleitungspunkten 107 einwirkenden Kraft und deren Kraftangriffsrichtung genügen jedoch auch drei im Winkelabstand von 120° angeordnete Meßstellen. Es können jedoch auch mehr als vier Meßstellen vorgesehen sein, beispielsweise sechs oder acht Meßstellen, die durch entsprechende Anzahl von im gleichmäßigen Winkelabstand im Basisteil 102 verteilt angeordneten Lastkolben 103 und zugeordnete Drucksensoren 105 ausgebildet sind.

Jeder Drucksensor 105 weist eine Membran 115 auf, an deren Unterseite Meßwiderstände 106 vorgesehen sind. Die Meßwiderstände 106 sind bevorzugt in Dickschichttechnologie hergestellt und als übliche Dehnungsmeßstreifen-Brückenschaltung ausgebildet (vgl. Fig. 11, rechts). Es können jedoch auch andere, dem Fachmann geläufige Druckwandler, z. B. nach dem piezoresistiven Meßprinzip, als Drucksensor 105 eingesetzt sein. Von besonderem Vorteil ist hier die einstückige Ausbildung der Membran 115 im Basisteil 102, da hierdurch dieses wesentliche Bauteil der Kraftmeßvorrichtung 101 in einem einzigen Herstellungsschritt zusammen mit dem Basisteil 102 für mehrere Meßstellen a,b,c,... gefertigt werden kann. Gemäß der Erfindung wird eine keramische Masse, beispielsweise $Al_2O_3$ verwendet, wobei die Ausnehmungen für die Lastkolben 103 und die einstückigen Membranen 115 in das Basisteil 102 gepreßt werden und das so geformte Element bei hoher Temperatur gesintert wird. Somit läßt sich das Basisteil 102 auf einfachste Weise mit einer Vielzahl von Membranen 115 versehen, die um eine zentrale Durchgangsöffnung 108 gleichmäßig verteilt sind.

Bei der zweiten Ausführungsform gemäß der Erfindung gemäß Fig. 9, 10 und 11, rechts, ist ein einziger Lastkolben einer Kraftmeßvorrichtung 131 durch einen umlaufenden Ring 133 gebildet, der in eine entsprechend ausgebildete Ringnut 143 im Basisteil 132 unter Zwischenschaltung von elastomerem Material im U-förmigen Ringspalt 134 eingepaßt ist. Dieser ringförmige Lastkolben 133 bildet somit eine Verschmelzung einer Vielzahl von einzelnen, örtlich begrenzten Lastkolben 103 der Fig. 8. Der ringförmige Lastkolben 133 wirkt unter Zwischenschaltung des elastomeren Materials auf eine Membran 145, die hier der Boden der Ringnut 143 ist und bevorzugt in gleichmäßiger Wandstärke einstückig im Basisteil 132 ringsumlaufend ausgebildet ist. Bei dieser Ausführung werden die Meßwiderstände 136 an der Unterseite der Membran 145 zur Ausbildung der einzelnen Meßstellen in verschiedenen voneinander beabstandeten Positionen angebracht. Es genügt jedoch auch, wenn der Boden der Ringnut 143 an mindestens drei Stellen so dünnwandig ist, daß diese Stellen als Membran 145 zur Bildung der jeweiligen Meßstellen a, b, c ausgebildet sind.

Wie aus der Darstellung in Fig. 9 ersichtlich, ist durch die Zusammenfassung zu einem einzigen ringförmigen Lastkolben 133 die Herstellung der Kraftmeßvorrichtung 131 weiter vereinfacht, da nur noch ein Bauteil als Lastkolben 133 gefertigt werden muß und das elastomere Material nur noch in einem Arbeitsgang in den umlaufenden Ringspalt 134 eingefüllt werden muß. Durch entsprechende Bestückung an der Unterseite der Membran 145 mit Meßwiderständen 136 kann dann die entsprechende gewünschte Anzahl der Meßstellen a,b,c,... in einfacher Weise je nach Bedarf hergestellt werden. Obwohl hier das Basisteil 132 wie beim ersten Ausführungsbeispiel ebenfalls ringförmig ausgeführt ist und eine zentrale Durchgangsöffnung 138 bildet, kann die Kraftmeßvorrichtung 131 auch im wesentlichen scheibenförmig, d. h. ohne Durchgangsöffnung 138 ausgebildet sein.

Die Fig. 10 zeigt einen Querschnitt durch die beiden vorstehenden Ausführungsbeispiele, wobei in der linken Hälfte die Ausführung mit einzelnen örtlich begrenzten Lastkolben 103 gezeigt ist, während in der rechten Hälfte der einstückige, ringförmige Lastkolben 133 dargestellt ist. Die Krafteinleitung erfolgt in der linken Hälfte durch einen knopfförmigen Krafteinleitungspunkt 107, während in der rechten Hälfte die Krafteinleitung auf den ringförmigen Lastkolben 133 durch eine ebenfalls ringförmige Wulst 137 erfolgt.

In der linken Hälfte ist die Anwendung der Kraftmeßvorrichtung 101 auf eine Abstützform eines Maschinenteils dargestellt. Die Kraftmeßvorrichtung 101 stützt sich dabei auf ein ortsfestes Fundament 109 ab, während an der Oberseite an den Krafteinleitungspunkten 107 eine Lagerplatte 110 angreift, wie dies durch den Kraftpfeil F dargestellt ist. Die Lagerplatte 110 kann dabei Teil einer Werkzeugmaschine oder eines Fahrzeugs sein oder zur Abstützung eines Hydraulikzylinders dienen. Um bei schräg angreifender Kraft F eine Verschiebung der Lagerplatte 110 zu vermeiden, ist diese über einen Absatz in die Durchgangsöffnung 108 eingepaßt. Bei Beaufschlagung mit einer gegenüber der Zentralachse der Kraftmeßvorrichtung 101 geneigten Kraftangriffsrichtung werden die einzelnen Meßstellen a, b, c, ... ungleich belastet. Beispielsweise würde der spiegelbildlich zu dem hier dargestellten Lastkolben 103 an der in Fig. 8 dargestellten Meßvorrichtung c angeordnete Lastkolben stärker belastet werden, so daß aus der Differenz der jeweils gemessenen vertikalen Kraftkomponenten unter Zugrundelegung des Abstandes zwischen den beiden Meßstellen (hier a und c) in einer rechnergesteuerten Auswerteeinrichtung (nicht dargestellt) die Angriffsrichtung der Kraft F bestimmt werden kann. Damit kann eine derartige Kraftmeßvorrichtung 101 auch als Überwachungssensor für zu hohe Querkräfte dienen.

In der linken Hälfte von Fig. 10 ist der Drucksensor als leicht austauschbarer Druckwandler 155 dargestellt, der mit Hilfe eines Befestigungsrahmens 113 an dem Basisteil 102 angebracht werden kann. Hierbei steht der Drucksensor 155 mit seiner Oberseite in Verbindung mit dem elastomeren Material, wie dies im einzelnen in der EP-C2-0 205 509 dargestellt ist. Bevorzugt ist jedoch die einstückige Ausbildung der Membran 115 bzw. 145 des Drucksensors 155 zusammen mit dem Basisteil 102, wie dies in Fig. 8 für dieses Ausführungsbeispiel und auch auf der rechten Hälfte der Fig. 10 dargestellt ist.

In der rechten Hälfte der Fig. 10 ist die Ausführungsform der Kraftmeßvorrichtung 131 vergrößert dargestellt, wobei der Lastkolben 133 gemäß der Ausführung nach Fig. 9 ringförmig in einer umlaufenden Ringnut 143 eingepaßt ist und auf eine einstückig mit dem Basisteil 132 ausgebildete Membran 145 wirkt. Der Lastkolben 133 wird hier über eine geringfügig über das Basisteil 132 hervorstehende Wulst 137 durch eine Schraubverbindung 111 belastet. Die Schraubverbindung 111 erstreckt sich durch die Durchgangsöffnung 138, wobei eine Mutter 116 die Wulst 137 belastet. Die Kraftmeßvorrichtung 131 stützt sich an ihrer Unterseite auf eine Ringfläche des Schraubbolzens 212 ab. Die Kraftmeßvorrichtung 131 bildet somit eine Art Unterlegscheibe, mit der die Anzugskraft der Mutter 116 direkt erfaßt werden kann. Durch die ringförmige Ausbildung der Kraftmeßvorrichtung 131 mit mehreren ringsum verteilten Meßstellen a, b, c, ... läßt sich somit die Gleichmäßigkeit der Anzugskraft in Bezug auf den Umfang der Schraubverbindung 111 kontrollieren.

Darüberhinaus lassen sich jedoch auch Biegebeanspruchungen auf die Schraubverbindung 111 erfassen, z. B. wenn die Mutter 116 ortsfest angeordnet ist und der Schraubbolzen 212 belastet wird, wie dies durch den Kraftpfeil B angedeutet ist. Bei einer derartigen Biegebeanspruchung würde der linke Teil des ringförmigen Lastkolbens 133 stärker beansprucht werden als der rechte Bereich, so daß an den hier rechts gelegenen Meßstellen eine geringere Belastung gemessen würde als an den links gelegenen Meßstellen. Damit läßt sich nicht nur qualitativ, sondern auch quantitativ eine Biegebeanspruchung der Schraubverbindung 111 erfassen.

In Fig. 11 ist die Unteransicht der Kraftmeßvorrichtung 101 bzw. 131 dargestellt, wobei wiederum links die Ausführung nach Fig. 8 und rechts die Ausführung nach Fig. 9 gezeigt ist. Die jeweils andere Hälfte für die im wesentlichen ringförmige Kraftmeßvorrichtung ergibt sich spiegelbildlich. In der linken Hälfte ist der einzelne Lastkolben 103 und der Ringspalt 104 in Strichlinien dargestellt, während der mit dem Befestigungsrahmen 113 montierte Drucksensor 115 in Strichpunktlinien dargestellt ist. Der Befestigungsrahmen 113 ist hierbei in einer Vertiefung in dem Basisteil 102 versenkt angeordnet und mit vier nicht näher bezeichneten Schrauben an dem Basisteil 102 befestigt. Hierdurch wird die Meßstelle a gebildet, während um jeweils 90° versetzt die Meßstellen b und d angedeutet sind.

In der rechten Hälfte sind die Meßstellen b' und c' unter einem Winkelabstand von 120° dargestellt, die mit der Meßstelle a in der linken Hälfte der Fig. 11 die zur Bestimmung der Kraftangriffsrichtung mindestens notwendigen drei Meßstellen a, b und c ausbilden. Ebenso wie in der linken Hälfte ist in der rechten Hälfte der Ringspalt 134 und der Lastkolben 133 in Strichlinien dargestellt, wobei der Lastkolben 133 wie in Fig. 9 gezeigt, ringsumlaufend ausgebildet ist. Auf der Unterseite der hier ebenfalls etwas vertieft angeordneten Membran 145 sind im gleichmäßigen Winkelabstand zur Bildung der Meßstellen b' und c' die Meßwiderstände 136 in Brückenschaltung bevorzugt im Siebdruckverfahren aufgebracht. Zwei der Meßwiderstände 136 sind dabei im Übergangsbereich von der Membran 145 zu dem Basisteil 132 angeordnet, während die beiden anderen Meßwiderstände 136 in der Mitte im Bereich der größten Verformung der Membran 145 angeordnet sind. Die Meßwiderstände 136 sind mit entsprechenden Anschlüssen verbunden, an denen die der Belastung proportionalen Meßwerte abgenommen und einer nicht näher dargestellten, dem Fachmann geläufigen Auswertevorrichtung weitergeleitet werden. Wie ersichtlich, können an die Unterseite der Membran 145 ringsum eine Vielzahl von derartigen Brückenschaltungen mit den Meßwiderständen 136 aufgebracht werden, so daß bei den hier vorliegenden Durchmesserverhältnissen etwa zwanzig Meßstellen gebildet werden können. Damit ist eine besonders hohe Meßgenauigkeit in der Bestimmung der Kraftangriffsrichtung möglich. Auch bei exakt vertikaler Kraftangriffsrichtung kann hierdurch eine hohe Meßgenauigkeit erzielt werden, wenn die Meßwerte aller Meßstellen a, b, c, ... gegebenenfalls in Gruppen addiert werden. Selbst bei Ausfall einer Meßstelle, beispielsweise bei einem Defekt eines Meßwiderstandes 136 kann dann somit durch die noch verbleibenden Meßstellen ein exakter Meßwert über die angreifende Kraft geliefert werden.

Die Fig. 12 zeigt im Querschnitt eine weitere Ausführungsform der Kraftmeßvorrichtung der Erfindung, die sich von den Ausführungsbeispielen der Fig. 8 und 9 durch eine vereinfachte und kostengünstigere Ausbildung des Drucksensorbereichs auszeichnet.

Das ringförmige Basisteil 152 kann wiederum bevorzugt aus Keramik hergestellt sein. Es besitzt unten eine Öffnung 157, die mit einem Durchmesser durch den Boden des Basisteils 152 geführt ist, der geringer ist als der Durchmesser bzw. die Weite der den Lastkolben 153 aufnehmenden Ausnehmung 154. In die vornehmlich ringförmige Öffnung 157 wird ein topfförmiger Drucksensor 155 eingesetzt, der mit seinem Ringflansch 156 satt am Boden der Ausnehmung 154 im Basisteil 152 aufliegt.

Der topfförmige Drucksensor 155 besitzt eine stirnseitige Membran 165, auf deren Außenseite wiederum die Widerstände 166 aufgebracht sind, während der dem Lastkolben 153 zugewandte zylindrische Innenraum 151 mit elastomerem Material (punktiert dargestellt) gefüllt ist, das entweder bereits vor dem Einsetzen des Drucksensors 155 bei dessen Herstellung eingefüllt wurde oder aber beim Zusammensetzen der Kraftmeßvorrichtung, d. h. im Zusammenhang mit dem Einbringen von elastomerem Material in die Ausnehmung 154 unter Einsetzen des Lastkolbens 153 eingefüllt wird.

Es ist zu beachten, daß mehrere Drucksensoren 155 analog dem ersten Ausführungsbeispiel angeordnet sein können, wobei jedoch für den Lastkolben 153 beide Alternativen möglich sind, nämlich örtlich begrenzte Lastkolben 103 gemäß Fig. 8 oder ein ringförmiger Lastkolben 133 gemäß Fig. 9, der sich im übrigen ebenfalls auf einfache Weise aus Keramik herstellen läßt.

Bei der Ausführungsform nach Fig. 13 wird wiederum ein Drucksensor 185, jedoch in unterschiedlicher Anordnung verwendet. Hierbei hat das Basisteil 172 einen U-förmigen Querschnitt, wobei in die Ausnehmung 174 ein Lastkolben 173 - wiederum unter Zwischenschaltung des elastomeren Materials - mit speziell geformter Innenseite eingesetzt ist.

Insbesondere ist an der Unterseite des Lastkolbens 173 eine zweifach abgestufte Ausnehmung 182 vorgesehen, in die der topfförmige Drucksensor 185 derart eingepaßt ist, daß der nach unten offene, mit elastomerem Material gefüllte Innenraum 171 des Drucksensors 185 mit dem elastomeren Material am Boden des Basisteils 172 in Verbindung steht. Die Membran 175 des Drucksensors 185 überspannt einen über ihr im Inneren des Lastkolbens 173 ausgebildeten freien Innenraum 177, der eine entsprechende Durchbiegung der Membran 175 bei Kraftausübung gestattet und aus dem die elektrischen Zuleitungen für die Widerstände 176 in nicht gezeigter Weise nach oben aus dem Lastkolben 173 herausgeführt werden, sofern nicht eine drahtlose Signalübertragung erfolgt.

Bei dem Ausführungsbeispiel der Fig. 13 können die Meßstellen wiederum wie in Fig. 8 gezeigt lokal begrenzt sein, wobei umfangsmäßig verteilt mehrere Drucksensoren 185 in entsprechende Ausnehmungen 182 an der Unterseite eines ringförmigen Lastkolbens 173 eingesetzt sind.

Es ist ersichtlich, daß eine derartige Ausführungsform nach Fig. 13 besonders einfach und kostengünstig herstellbar ist, da sowohl das Basisteil als auch der ringförmige Lastkolben unter Einformung entsprechender Ausnehmungen im letzteren, aus Keramik mittels eines äußerst einfachen Preßvorgangs, gefolgt von einem Sinterprozeß hergestellt werden können. Nach Einsetzen der ebenfalls aus Keramik geformten Drucksensoren 185 erfolgt dann das Zusammenfügen von Lastkolben 173 in das Basisteil 172 unter Einfüllen des elastomeren Materials in blasenfreier Form, wie dies in der eingangs genannten EP-C2-0 205 509 beschrieben ist. Bezüglich der Formung der einzelnen Elemente aus Keramik wird Bezug genommen auf die EP-A1-0 394 632.

## Patentansprüche

1. Kraft- bzw. Druckmeßvorrichtung (1;30;35) mit einem Topfgehäuse (2;32;42), in dem unter Bildung eines engen Ringspalts (4) ein Krafteinleitungskolben (3;63;103;133;153;173) eingesetzt ist, wobei der Ringspalt (4;104;134;154;174) und ein Bodenbereich im Topfgehäuse (2;32;42) mit elastomerem Material (5) gefüllt ist, das fest an den Kontaktflächen haftet und das in Kontakt mit einem Kraft- bzw. Druckmeßelement (25;105;113;135) ist, dadurch gekennzeichnet, daß das Kraft- bzw. Druckmeßelement eine Meßmembran (z. B. 2d) aufweist, die einstückig mit dem Topfgehäuse (z. B. 2) in dessen Boden ausgebildet ist.

2. Kraft- bzw. Druckmeßvorrichtung nach Anspruch 1, dadurch gekennzeichnet, daß das Topfgehäuse (z. B. 2) einen starren Einspannring (2a), einen flexiblen Übergangsring (2b) und einen stabilen Membranhaltering (2c) aufweist und vorzugsweise einstückig aus Keramik hergestellt ist.

3. Kraft- bzw. Druckmeßvorrichtung nach Anspruch 1 oder 2, dadurch gekennzeichnet, daß der Kolben (3) an einer starren Kraft- bzw. Druckeinleitungsplatte (10;40) zentral angesetzt ist, die gegenüber der effektiven Querschnittsfläche des Kolbens (3) eine erheblich unterschiedliche Querschnittsfläche aufweist, und daß die Platte (10;50) unter Bildung eines weiteren engen Ringspalts (11;51) in einer hohlzylindrischen Fortsetzung (13;53) des Topfgehäuses (32;52) bzw. einer Halterung für das Topfgehäuse (2;32;52) durch in den weiteren Ringspalt (11;51) eingefülltes elastomeres Material (5) geführt ist.

4. Kraft- bzw. Druckmeßvorrichtung nach Anspruch 1 oder 2, dadurch gekennzeichnet, daß der Kolben (3) zentral an eine weitere Membran (40;60) angesetzt ist, die eine wesentlich größere effektive Querschnittsfläche besitzt als der Kolben (3), daß das Topfgehäuse (42) bzw. eine Halterung dafür eine der Fläche der Membran (40;60) entsprechende Ausdehnung besitzt und umfangsmäßig starr mit der Membran (40;60) verbunden ist.

5. Kraft- bzw. Druckmeßvorrichtung nach Anspruch 4, dadurch gekennzeichnet, daß die Membran (40;60) einen flexiblen Zwischenringbereich (40a;60a) aufweist, der entweder durch Materialverdünnung (40a) oder kreisförmige Wellung (60a) gebildet wird.

6. Meßvorrichtung nach Anspruch 4 oder 5, dadurch gekennzeichnet, daß an der Oberseite des Topfgehäuses (42) bzw. einer Halterung dafür als Anschlagsbegrenzung der Unterseite der Membran (40) nahe gegenüberliegend vornehmlich flächige Erhebungen (42e) ausgebildet sind.

7. Meßvorrichtung nach einem der Ansprüche 3 bis 6, dadurch gekennzeichnet, daß zwischen der Unterseite der starren Platte (10;50) bzw. der Membran (40;60) ein freier Ringraum (12;52) ausgebildet ist.

8. Meßvorrichtung nach Anspruch 3 oder 7, dadurch gekennzeichnet, daß die Krafteinleitungsplatte (50) eine Dicke bzw. Höhe besitzt, die größer ist als der halbe Radius, vorzugsweise größer als der Radius der Platte (50), und daß in einer zylindrischen Vertiefung eine Abstützung (50a) eingesetzt ist, in der reibungsarm ein Krafteinleitungselement, vorzugsweise ein Auflagerelement, wie eine Metallkugel (50b), eine Schneide, ein Punktkegel oder dergleichen gelagert ist.

9. Flächig ausgebildete Kraftmeßvorrichtung, gekennzeichnet durch ein Basisteil (102;132;152;172) und mindestens drei voneinander beabstandete, in dem Basisteil ausgebildete Meßstellen (a, b, c, ...), insbesondere in Form von Kraft- bzw. Druckmeßzellen nach einem der Ansprüche 1 bis 8.

10. Meßvorrichtung nach Anspruch 9, dadurch gekennzeichnet, daß das Basisteil (132;152;172) ringförmig ist und die Meßstellen umfangsmäßig vornehmlich gleich beabstandet mit den Lastkolben (103;133;153;173) in in dem Basisteil ausgebildeten Vertiefungen (112), umgeben von elastomerem Material (104) eingesetzt sind, wobei zumindest an den Meßstellen, vorzugsweise jedoch über den gesamten Umfang die Unterseite des Basisteils (132;152;172) membranartig (115;145) flach ausgebildet ist.

11. Meßvorrichtung nach Anspruch 9 oder 10, dadurch gekennzeichnet, daß für mehrere Meßstellen ein einziger ringförmiger Kolben (133;153;173) in einer entsprechenden ringförmigen Vertiefung (134;154;174) im Basisteil (132;152;172) in dem elastomeren Material eingelassen ist.

12. Meßvorrichtung nach Anspruch 11, dadurch gekennzeichnet, daß auf der flachen membranartigen Unterseite des ringförmigen Basisteils den einzelnen Kolben (133;153;173) diskrete Druckmeßelemente (115) gegenüberliegend angeordnet sind bzw. bei ringförmigem Kolben (133;153;173) auch die gesamte Unterseite als kontinuierliche Druckmeßbahn ausgebildet sein kann.

13. Meßvorrichtung nach einem der Ansprüche 9 bis 12, dadurch gekennzeichnet, daß die Kraftmeßvorrichtung in eine in der Unterseite des Lastkolbens (173) ausgebildete Vertiefung (177) bzw. in einer im Boden des Basisteils (152) vorgesehenen Vertiefung (157) eingelassen ist und über das elastomere Material beaufschlagt wird.

14. Kraft- bzw. Druckmeßvorrichtung, gekennzeichnet durch eine modulare Ausbildung in Form einer Meßkerze (250), ähnlich einer Brennkraftmaschinenzündkerze, mit einem die Sensorelektronik (53) abgedichtet umgebenden Basisgehäuse (51a) und einem daran ansetzbaren Meßkopf (51b), der bevorzugt eine Druck- bzw. Kraftmeßvorrichtung nach einem der vorhergehenden Ansprüche aufweist und gegebenenfalls unterschiedliche Meßköpfe (51b) vorgesehen sind.

15. Vorrichtung nach Anspruch 14, dadurch gekennzeichnet, daß der Meßkopf (51b) mit Mitteln (54) zum Anschließen an eine Meßstelle versehen ist.

16. Verwendung einer Kraft- bzw. Druckmeßzelle nach einem der vorhergehenden Ansprüche bei Werkzeugmaschinen, Werkzeugen, Klemmvorrichtungen, Prüfgeräten, etwa Härteprüfgeräten, in Lagern oder als Auflager.

17. Verwendung einer Kraft- bzw. Druckmeßzelle nach einem der Ansprüche 1 bis 15 zur Messung besonders hoher bzw. niedriger Drücke, hier insbesondere als Füllstandsanzeige bzw. Barometer, Manometer oder dergleichen.

Fig. 1

Fig. 2

Fig.3

Fig.4

Fig.7

Fig 5

Fig.6

FIG.8

FIG. 9

FIG.10

FIG.11

FIG.12

FIG.13